**Europäisches Patentamt**

**European Patent Office**

**Office européen des brevets**

(19)

(11) Publication number : **0 144 987 B2**

# NEW EUROPEAN PATENT SPECIFICATION

(12)

(45) Date of publication of the new patent specification : **04.03.92 Bulletin 92/10**

(51) Int. Cl.$^5$ : **C08L 81/02**

(21) Application number : **84114886.9**

(22) Date of filing : **07.12.84**

(54) **Method for the crystallization of poly(arylene sulfide).**

The file contains technical information submitted after the application was filed and not included in this specification

(30) Priority : **07.12.83 US 559136**

(43) Date of publication of application :
**19.06.85 Bulletin 85/25**

(45) Publication of the grant of the patent :
**09.11.88 Bulletin 88/45**

(45) Mention of the opposition decision :
**04.03.92 Bulletin 92/10**

(84) Designated Contracting States :
**AT BE CH DE FR GB IT LI LU NL SE**

(56) References cited :
**EP-A- 0 103 279**
**DE-A- 3 143 992**
**Encyclopedia of Polymer Science and Technology, 1966, Vol. 4, p. 462**

(73) Proprietor : **PHILLIPS PETROLEUM COMPANY**
**5th and Keeler**
**Bartlesville Oklahoma 74004 (US)**

(72) Inventor : **Scoggins, Lacey Eugene**
**1310 S.E.Lariat Dr.**
**Bartlesville, OK 74006 (US)**
Inventor : **Senatore, Guy**
**5221 S.E.Nowata Rd.**
**Bartlesville, OK 74006 (US)**

(74) Representative : **Dost, Wolfgang, Dr.rer.nat.,**
**Dipl.-Chem. et al**
**Patent- und Rechtsanwälte**
**Pagenberg-Dost-Altenburg & Partner**
**Galileiplatz 1**
**W-8000 München 80 (DE)**

EP 0 144 987 B2

Jouve, 18, rue Saint-Denis, 75001 PARIS

## Description

This invention relates to the production of arylene sulfide polymer. In one of its aspects, this invention relates to a method by which the crystallization of poly(arylene sulfide) which has been prepared using an additive that reduces the melt flow of the polymer, particularly polymer prepared with alkali metal carboxylate, is affected. In another of its aspects, this invention relates to a method for lowering the rate of crystallization of poly(arylene sulfide). In yet another of its aspects, this invention relates to the lowering of the melt crystallization temperature (Tmc) of poly(arylene sulfide). In still another aspect of the invention, it relates to end products having improved physical properties that are produced from poly(arylene sulfide) that is treated by the method of the present invention.

Generally, in the preparation of poly(arylene sulfide), or more particularly poly(phenylene sulfide), particulate polymer, after separation from the reaction mixture, is subjected to a series of washing operations to remove residual sodium chloride by-product and other, particularly ash-producing, contaminants. We have observed that polymer passing through a series of wash operations is subject to an increase in the melt crystallization temperature (Tmc). Since the production of end products from poly(phenylene sulfide) often requires or is benefitted by lower Tmc values than would be obtained after succession of purified water washings, an investigation was initiated to determine the reason for the increase in Tmc. From this investigation, it was found that the removal of polyvalent metal ions by extraction from the polymer in the purified water washes was the cause of the increase in Tmc. It was then discovered that the process could be reversed to bring about a lowering of the Tmc and to provide poly(phenylene sulfide) with a decreased rate of crystallization. The EP-A-103 279, a not prepublished document under Art. 54(3) EPC, provides a method for affecting crystallization in which phenylene sulfide polymer is contacted with polyvalent metal cations. Lowered melt crystallization temperatures are achieved at elevated treatment temperatures, i.e. from 149°C to 13.9°C below the melting point of the polymer.

The object of this invention to provide a method for affecting the crystallization of poly(arylene sulfide), more particularly poly(phenylene sulfide). It is still another object of this invention to provide polymer of arylene sulfide having a lower melt crystallization temperature (Tmc) and, therefore, a slower melt crystallization rate than the same polymer would have without being treated by the present process.

It is still another object of this invention to provide polymeric end products such as fibers, film, and molded objects which have physical characteristics improved over those characteristics which they would have without being treated by the process of the present invention.

Other objects, aspects, and the several advantages of the invention will be apparent to those skilled in the art upon a study of the specification and the appended claims.

According to the invention, a method as defined in the claims is provided for affecting the crystallization of poly(arylene sulfide) in which the polymer is treated with mono- and polyvalent cations in solution, preferably aqueous, at a temperature and for a time sufficient to affect the crystallization of the polymer. The manner in which the crystallization is affected can be described as a decrease in the rate of crystallization or as a lowering of the melt crystallization temperature (Tmc). Thus, the crystallization of phenylene sulfide particulate polymer is affected by heating the polymer slurry in an aqueous medium in the presence of at least one water soluble chemical compound selected from salts, oxides and hydroxides of Groups IA and IIA of the Periodic Table under conditions of temperature and for a period of time sufficient to reduce the melt crystallization temperature and the rate of crystallization of the polymer. The treatment is normally carried out with purified, particulate resins to expedite contact with the treating agent, but can also be accomplished using resin as it is formed in the reactor. The treating step can be carried out with dry resins after it has been purified substantially to remove the contaminants, such as metal halides, organic solvent, metal sulfide, and other impurities which can be present in the crude reaction product or with crude, wet resin.

The polymers produced by this treatment were found, when used in film and fiber production, to provide greater processing time for increasing stretch orientation and draw, respectively, because of the slow melt crystallization rate. In the production of molded objects, the slow rate of crystallization was found to prevent internal cracking because more time for stress relaxation is available during cooling.

Arylene sulfide polymers, particularly poly(phenylene sulfide), that can be employed in the process of this invention include those polymers, generally, which have been prepared by use of a p-dihalobenzene, an alkali metal sulfide, an organic amide, and an additive that reduces the melt flow of the polymer produced as compared with the polymers produced without the use of the additive, such as is particularly illustrated by the use of an alkali metal carboxylate as in U.S. Patent No. 3,919,177. Optionally, the polymer can be produced with the above components together with an alkali metal hydroxide, such as sodium hydroxide, e.g., in an amount up to about 0.8 mol of alkali metal hydroxide per mole of alkali metal sulfide and/or a polyhaloaromatic compound such as 1,2,4-trichlorobenzene, e.g. in an amount up to about 0.6 parts by weight per 100 parts by weight p-dihalobenzene. Lithium halides are alternative additives which can be used to produce polymer of reduced melt flow. If desired, water which can be present with the reactants can be removed by distillation prior to the polymerization reaction. The polymers produced will generally have a melt flow within the range of about 5 to about 300, preferably about 40 to about 150.

The particulate resin useful in this invention which is typified by poly(phenylene sulfide) as made according to U.S. Patent No. 3,919,177 can be recovered from the reaction process as a free flowing white powder having a particle size range averaging from about 5 to about 1500 micrometers, generally ranging from about 10 to about 150 micrometers or it can be recovered by merely processing a coarse particulate polymer. Although the process of this invention is applicable to polymers of various particle sizes, the process is more easily carried out with more finely divided particles.

It is to be understood that the processes of this invention can be carried out in a number of ways. In one manner of operation, the reaction mass comprising particulate polymer, alkali metal halide, and organic amides can be subjected to suitable separation techniques to recover polymer substantially free of organic amide, unreacted reactants, and alkali metal halides. For example, the polymer can be recovered from the reaction slurry and then combined with water to extract ash-forming materials. As has been alluded to above, the amount of impurities removed by water extraction methods certainly affects the degree to which the present inventive treatment will be required. The invention seeks to produce a particulate polymer having a residual mono- or polyvalent metal cation content in the range of about 50 to about 5000 ppm, preferably about 100 to about 3000 ppm.

The treating agents suitable for this invention are water soluble and are selected from mono- and polyvalent salts, oxides and hydroxides derived from the alkali and alkaline earth metal elements of Periodic Groups IA and IIA since many of these are colorless, water soluble, and relatively inexpensive. Particularly useful are hydroxides of alkali and alkaline earth metals. At present, the preferred compound for use in this invention is (1) calcium oxide or its hydrated form, calcium hydroxide or (2) $CaCl_2$.

Although this invention is aimed principally at the use of aqueous solution, in its broadest application any solvent in which the treating agents can be dissolved can be used. The use of tap water as the added solution is not encompassed by this invention.

In accordance with an embodiment of this invention, phenylene sulfide polymer is contacted in an aqueous slurry with at least one chemical treating agent as defined herein at an elevated temperature and for a period of time sufficient to affect the crystallization of the polymer. The effectiveness of the treatment can be assessed by noting the change in the melt crystallization temperature which should be lowered by the treatment. The determination of melt crystallization temperature is well known in the art.

The treating to affect the crystallization of the polymer is carried out at a temperature in the range of from 26,7°C to below 149°C. Originally, the contacting was thought to require a temperature of at least about 149°C (300°F) not exceeding about 14°C (25°F) below the melting point of the polymer, so that, ordinarily, the contacting temperature would be in the range of about 177°C (350°F) to about 271°C (520°F). More recent experience has determined, however, that operation of the invention is easily accomplished at temperatures on the range of 54-60°C (130-140°F) using wet resin (see Example III and IV below) and that operation is feasible at temperatures down to 26,7°C.

The time for treatment or contacting can vary greatly depending on the temperature and the nature of the arylene sulfide polymer. It generally will be within the range of about 5 minutes to about 24 hours, preferably about 30 minutes to about 10 hours. In general, it can be said that the contact time decreases with increasing temperature. The pressure should be sufficient to maintain liquid phase conditions which can range from about 0 to about 10.3 MPa (1500 psi). Repeated treatments can be employed, if desired or the process can be carried out in several phases, if desired.

The polymer/water slurry can consist of about 10 to about 60 weight percent polymer and more preferably from about 20 to about 50 weight per cent polymer to provide convenient handling and separation factors.

After normal purification and drying steps, the resin is left in the particulate size and form at which the process started. As stated above, utilization of finely divided resins will expedite contact with the water and treating agent.

The process of this invention can be conducted batchwise or continuously.

The heating and contacting of the chemical treating agent can be carried out in conventional equipment. A convenient method for carrying out the process is to contact the polymer slurry with a chemical treating agent in an enclosed tank provided with agitation. The contacting can be carried out in a single vessel or in a plurality of vessels. The polymer can be separated from the slurry after contacting by suitable techniques including pressure reduction, filtration, and the like. The polymer is subsequently dried for further use as desired. Such further uses as extrusion into sheets, extrusion into film, spinning into fiber, or molding into molded objects can be contemplated.

The following examples are intended to illustrate the compositions and process of the invention.

Example I

In this example the preparation of a representative poly (phenylene sulfide) Ryton® A resin from a reaction mixture containing sodium sulfide, N-methyl-2-pyrrolidone (NMP), sodium acetate, water, p-dichlorobenzene (DCB), and 1,2,4-trichlorobenzene (TCB) is described. 10.6 kg (23.5 lb) of sodium acetate and 97.3l (25.7 gallons) of NMP were charged to a necessary Ryton® pilot plant reactor, which was then purged three times with nitrogen. An aqueous sodium sulfide solution formed by mixing 33 kg (72.6 lb) of a 50.34 weight-% NaOH solution and 39.8 kg (87.7 lb) of a solution containing 58.99 weight-% NaHS and 0.21 weight-% $Na_2S$ was added to the reactor. Feed lines were flushed with 30.3l (8.0 gallons) of NMP, which was also charged to the reactor. The reactor content was then dehydrated for 90 minutes at 0.09 MPa (13 psig) and a temperature ranging from 167°C (332°F) (initial) to about 232°C (450°F) (final).

Subsequently 60.3 kg (132.9 lb) of DCB were charged, and the polymerization reaction was carried out for about 2 hours 20 minutes at a temperature ranging from 230°C (447°F) (initial) to 266°C (510°F) (final) and a pressure ranging from 0.21 Mpa (30 psig) (initial) to 0.93 MPa (135 psig) (final). After one hour at about 264°C (508°F), 90 ml of TCB and 7.6l (2.0 gallons) of NMP were added, and the polymerization was continued for 2 more hours at a temperature of about 265°C (509°F) and a pressure of about 1.0 MPa (145 psig).

37.9l (Ten gallons) of deionized water were charge to the reactor after cool ing to about 121°C (250°F). Thereafter, the reactor mixture was cooled to about 100°C (213°F), under a nitrogen pressure of about 0.69 MPa (100 psig), and was transferred to a dilution tank containing 189 l (50 gallons) of deionized water. After filtration, the polymer filter cake was washed once with 454l (120 gallons) cold deionized water 21°C (70°F) and twice with 303 l (80 gallons) of hot deionized water 177°C (350°F) and filtered after each wash.

Example II

Eight wet poly(phenylene sulfide) batches prepared and washed in accordance with the procedure described in Example I were treated as follows. Half of each of the wet resin batches was dried at about 93.3-149°C (200-300°F) under atmospheric pressure conditions for about 3 hours and used as control runs. The other half of each batch was treated for about 1 hour with aqueous solutions containing ionic metal compounds in a stirred vessel at 177°C (350°F) and also used as control runs. Pertinent data of untreated control resins (designated A) and treated control resins (designated B) are listed in Table I.

4

EP 0 144 987 B2

TABLE I

Comparison runs; untreated (A) and treated (B) resins

| Run | Treating agent[e] | Concentration[a] (as ppm CaO in $H_2O$) | Tmc[b] (°C) | Flow rate[c] (g/10 min) | | Ash weight % | Insolubles[d] (ppm) |
|---|---|---|---|---|---|---|---|
| | | | | After 5 minutes | After 30 minutes | | |
| 1A | None | 0 | 225 | 98 | 367 | 0.11 | 53 |
| 1B | Calcium oxide | 530 | 160 | 42 | 122 | 0.29 | 37 |
| 2A | None | 0 | 198 | 45 | 123 | 0.13 | 20 |
| 2B | Calcium oxide | 265 | 183 | 25 | 97 | 0.34 | 30 |
| 3A | None | 0 | 224 | 70 | 160 | 0.09 | 33 |
| 3B | Tap water | 225 | 217/191 | 55 | 152 | 0.10 | 29 |
| 4A | None | 0 | 227 | 180 | 312 | 0.03 | — |
| 4B | Calcium acetate | 530 | 210 | 141 | 267 | 0.14 | — |
| 5A | None | 0 | 210 | 137 | 246 | 0.06 | — |
| 5B | Calcium chloride | 530 | 204 | 139 | 310 | 0.09 | — |
| 6A | None | 0 | 222 | 93 | 187 | 0.06 | — |
| 6B | Magnesium hydroxide | 530 | 173 | 74 | 137 | 0.68 | — |
| 7A | None | 0 | 197 | 77 | 127 | 0.18 | — |
| 7B | Sodium hydroxide | 530 | 179 | 59 | 109 | 0.24 | — |
| 8A | None | 0 | — | — | — | — | — |
| 8B | Barium hydroxide | 229 | 180 | 48 | 88 | 0.31 | — |

Footnotes to Table I

a) $\dfrac{\text{ppm of dissolved compound}}{\text{Formula weight of dissolved compound}} \times 56.1$

b) Determined with a Perkin Elmer DSC-2C differential scanning calorimeter with attached 3500 Data Station; cooling of the polymer melt started at 360°C; rate of cooling was 20°C/minute.

c) Determined at 316°C according to a modified ASTM D1238 method employing an orifice of 2.1 mm (0.0825″) diameter and a 8.0 mm (0.315″) length and an effective weight of 5.0 kg (including the weight of the piston).

d) Determined by weighing the dried residue of the dissolution of PPS in 1-chloronaphthalene at 235-245°C; 4 samples of 40 grams each are placed in a 0.04 mm (325 mesh) screen basket and immersed in 1.0 liter of 1-chloronaphthalene.

e) Control treating runs made at 177°C.

Data in Table I show that treatment of wet PPS resin with aqueous solutions of ionic compounds, preferably alkali metal and alkaline earth metal hydroxides (Treated Control Runs 1B, 2B, 6B, 7B, 8B) results in a substantial lowering of the melt crystallization temperature, Tmc, to about 160-180°C. Metal chlorides do not appear to be particularly effective at the conditions of Run 5B. Ash levels increased, yet generally stayed at acceptable levels of about 0.2-0.7 weight-%. The flow rate of treated PPS generally decreased, which indicates some crosslinking action of metal ions, particularly divalent ions ($Ca^{2+}$, $Mg^{2+}$, $Ba^{2+}$). The characteristic flow rate increase by a factor of about 2-3 of uncured, branched PPS after heat-soaking for about 30 minutes vs. flow rate after heating for only 5 minutes was hardly affected by the treatment with dissolved ionic compounds.

Example III

This example illustrates the treatment of PPS with aqueous solutions of calcium compound at a relatively low temperature. 10.7 kg (23.5 lb) of sodium acetate and 59.4l (15.7 gallons) of NMP were charged to a Ryton® pilot plant reactor, which was purged three times with nitrogen. Then a mixture of 33 kg (72.7 lb) of an aqueous 50.70 weight-% solution of NaOH and of 40.5 kg (89.2 lb) of an aqueous solution containing 58.17 weight-% NaSH and 0.35 weight-% $Na_2S$ was added to the reactor. Feed lines were flushed with a total amount of 68.1 l (18.0 gallons) of NMP, which was also charged to the reactor. The reactor content was dehydrated for about 90 minutes at a pressure of about 0.12 MPa (17 psig) and a temperature ranging from 167°C (333°F) (initial) to 223°C (433°F) (final).

Subsequently 61.9 kg (136.4 lb) of DCB were charged, and the polymerization was carried out at about 225-232°C (437-450°F) and a pressure of 0.20-0.48 MPa (29-70 psig) for about 2 hours, and then at about 266°C (510°F) and 1.03-1.13 MPa (150-164 psig) for about 1 hour (after a 20 minutes heat-up period to raise the temperature from 232°C (450°F) to 266°C (510°F)). Finally 105 milliliters of TCB and 7.6l (2 gallons) of NMP were charged, and the polymerization was continued at 266°C/1.12 MPa) (510°F/162 psig). 37.9 l (Ten gallons) of deionized water were added to the reactor, which had been cooled to 135°C (275°F), so as to accomplish separation into a PPS phase and a NMP phase. The reactor content (at 108°C (225°F)) was then transferred by means of pressurized nitrogen into a dilution tank containing 189l (50 gallons) of deionized water (at about 26.7°C (80°F)) and 255 grams of hydrated lime, $Ca(OH)_2$. The temperature of the mixture was about 60°C (140°F).

After about 2 hours, the cooled PPS slurry was filtered through metal screens, and the PPS filter cake was washed once with about 454 l (120 gallons) of cold city water and twice with about 303l (80 gallons) of hot city water 177°C (350°F). The polymer was then dried for 2 hours in air at about 177°C (350°F).

The Ca-treated PPS had a Tmc of 169°C (for determination see footnote to Table I), a $Na^+$ content of 222 ppm, a $Ca^{2+}$ content of 327 ppm, and a total ash level of 0.27 weight-%.

These results show that a Tmc lower than those listed in Table I can be attained by treatment with a Ca compound at a temperature considerably lower than the 177°C (350°F) employed in the treated control runs 1B-8B of Example II.

Example IV

This example illustrates the treatment of PPS with aqueous $CaCl_2$. One polymer was prepared essentially in accordance with the procedure described in Example III except that (a) 222 grams of $CaCl_2$ dissolved in 3.79 l (1 gallon) of water plus 34 l (9 gallons) of city water were added to the reactor at about 135°C (275°F), after the polymerization had been completed, and (b) no lime was added to the dilution tank. The washed and dried PPS resin had a Tmc of 174°C and an ash level of 0.49%.

A second run was carried out essentially in accordance with the procedure described in Example III, except that 222 grams of CaCl$_2$ (in lieu of 255 grams of Ca(OH)$_2$) were added to the dilution tank (temperature of the mixture: about 58°C (136°F)). This washed and dried polymer had a Tmc of 170°C and an ash level of 0.48 weight-%. These results confirm those reported in Example III.

The test results also show that CaCl$_2$ is condiderably more effective in reducing the Tmc of wet, unwashed PPS (treated at 58°C (136°F) to 135°C (275°F)) than in reducing the Tmc of washed, dried PPS (treated at 177°C (350°F), see run 5B of Table I).

## Claims

1. A method for affecting the crystallization of poly(arylene sulfide) characterized by treating said poly(arylene sulfide) with an added solution of a treating agent selected from water soluble, mono and polyvalent salts, hydroxides and oxides of alkali and alkaline earth metals with the exception of tap water, at a temperature in the range of from 26.7°C to below 149°C so that metal cations are present in the polymer composition after the treatment in a concentration in the range of 50 to 5000 ppm.

2. The method of claim 1 characterized in that said treating is carried out in aqueous solution.

3. The method of claim 1 or 2 characterized in that said treating agent is selected from said mono and polyvalent metal salts.

4. The method of any of the preceding claims characterized in that said metal cation is supplied by an aqueous solution of CaCl$_2$.

5. The method of any of claims 1 to 4 characterized in that said metal cation is supplied by an aqueous solution of calcium oxide.

6. The method of any of the preceding claims characterized in that said poly(arylene sulfide) is poly(phenylene sulfide).

## Patentansprüche

1. Verfahren zur Beeinflussung der Kristallisation von Poly(arylensulfid), gekennzeichnet durch Behandeln des Poly(arylensulfids) mit einer hinzugefügten Lösung eines unter wasserlöslichen ein- und mehrwertigen Salzen, Hydroxiden und Oxiden von Alkali- und Erdalkalimetallen ausgewählten Behandlungsmittels mit Ausnahme von Leitungswasser bei einer Temperatur im Bereich von 26,7 °C bis unter 149 °C, so daß nach der Behandlung Metallkationen in der Polymerzusammensetzung in einer Konzentration im Bereich von 50 bis 5000 ppm vorhanden sind.

2. Verfahren nach Anspruch 1, dadurch gekennzeichnet, dass die Behandlung in einer wäßriger Lösung durchgeführt wird.

3. Verfahren nach Anspruch 1 oder 2, dadurch gekennzeichnet, dass das Behandlungsmittel unter ein-und mehrwertigen Metallsalzen ausgewählt ist.

4. Verfahren nach einem der vorstehenden Ansprüche, dadurch gekennzeichnet, dass das Metallkation durch eine wässrige Lösung von CaCl$_2$ bereitgestellt wird.

5. Verfahren nach einem der Ansprüche 1 bis 4, dadurch gekennzeichnet, dass das Metallkation durch eine wäßrige Lösung von Calciumoxid bereitgestellt wird.

6. Verfahren nach einem der vorstehenden Ansprüche, dadurch gekennzeichnet, dass das Poly(arylensulfid) Poly(phenylensulfd) ist.

## Revendications

1. Procédé pour agir sur la cristallisation de poly(sulfur d'arylène ) caractérisé en ce qu'on traite le poly(sulfure d'arylène) avec une solution ajoutée d'un agent de traitement choisie parmi des sels, des hydroxydes et des oxydes, mono- et polyvalents, solubles dans l'eau, de métaux alcalins et alcalino-terreux à l'exception de l'eau de distribution à une temperature comprise entre 26, 7 °C et en-dessous de 149 °C de façon à ce que les cations métalliques soient présents dans la composition de polymère après le traitement, en une concentration comprise entre 50 et 5000 ppm.

2. Procédé selon la revendication 1, caractérisé en ce qu'on met en oeuvre le traitement en solution aqueuse.

3. Procédé selon la revendication 1 ou 2, caractérisé en ce que l'agent de traitement est choisi parmi des sels métalliques mono- et polyvalents.

4. Procédé selon l'une quelconque des revendications précédentes, caractérisé en ce que le cation métallique est fourni par une solution aqueuse de $CaCl_2$.

5. Procédé selon l'une quelconque des revendications 1 à 4, caractérisé en ce que le cation métallique est fourni par une solution aqueuse d'oxyde de calcium.

6. Procédé selon l'une quelconque des revendications précédentes, caractérisé en ce que le poly(sulfure d'arylène) est le poly(sulfure de phénylène).